(19) **Europäisches Patentamt**
**European Patent Office**
**Office européen des brevets**

(11) **EP 3 717 106 B1**

(12) **FASCICULE DE BREVET EUROPEEN**

(45) Date de publication et mention
de la délivrance du brevet:
**31.07.2024 Bulletin 2024/31**

(21) Numéro de dépôt: **18827206.6**

(22) Date de dépôt: **29.11.2018**

(51) Classification Internationale des Brevets (IPC):
**B01D 63/06** *(2006.01)*    **B01D 71/02** *(2006.01)*

(52) Classification Coopérative des Brevets (CPC):
**B01D 63/066; B01D 71/02**

(86) Numéro de dépôt international:
**PCT/FR2018/053044**

(87) Numéro de publication internationale:
**WO 2019/106306 (06.06.2019 Gazette 2019/23)**

(54) **STRUCTURE FILTRANTE MEMBRANAIRE MONOLITHIQUE**

**MONOLITHISCHE MEMBRANFILTRATIONSSTRUKTUR**

**MONOLITHIC MEMBRANE FILTRATION STRUCTURE**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2017 FR 1761432**

(43) Date de publication de la demande:
**07.10.2020 Bulletin 2020/41**

(73) Titulaire: **SAINT-GOBAIN CENTRE DE
RECHERCHES
ET D'ETUDES EUROPEEN
92400 Courbevoie (FR)**

(72) Inventeurs:
• **PINSON, Sébastien**
  **84300 Cavaillon (FR)**
• **LEPLAY, Paul**
  **84440 Robion (FR)**
• **MOELLER, Malte**
  **96472 Roedental (DE)**
• **NEUFERT, Ronald**
  **96247 Michelau (DE)**
• **FABER, Michael**
  **96465 Neustadt (DE)**

(74) Mandataire: **Saint-Gobain Recherche
B.P. 135
39, quai Lucien Lefranc
93303 Aubervilliers Cedex (FR)**

(56) Documents cités:
**WO-A1-2015/177476    WO-A1-2016/097661
WO-A1-2017/103473**

**Description**

L'invention se rapporte au domaine des structures filtrantes en matériau inorganique destinées à la filtration des liquides en particulier les structures poreuses revêtues d'une membrane afin de séparer des particules ou des molécules d'un liquide, plus particulièrement de l'eau, notamment de l'eau de production issue de l'extraction pétrolière ou des gaz de schiste. Elle trouve également son application dans divers procédés industriels de purification et/ou de séparation de liquides dans le domaine de la chimie, de la pharmaceutique, de l'alimentaire ou l'agroalimentaire.

On connaît depuis longtemps des filtres utilisant des membranes céramiques ou non pour réaliser la filtration de fluides variés, notamment d'eaux polluées.

Les filtres sont généralement réalisés à partir de supports tubulaires en un matériau inorganique poreux formé de parois délimitant des canaux longitudinaux parallèles à l'axe desdits supports. La surface interne des canaux est recouverte d'une membrane séparatrice. Cette membrane comprend un matériau le plus souvent inorganique, dont la nature et la morphologie sont adaptées pour arrêter les molécules ou les particules polluantes, dans la mesure où leur taille est de l'ordre du diamètre médian des pores de ladite membrane.

On connaît une première technique dite de filtration frontale impliquant le passage du fluide à traiter à travers un média filtrant, perpendiculairement à sa surface. Les filtres frontaux comportent typiquement une portion des canaux bouchés sur leur face avant et une portion des canaux bouchés sur leur face arrière, afin de ménager des canaux d'entrée et des canaux de sortie séparés par des parois filtrantes au travers desquelles doit passer le liquide à filtrer. Celui-ci se décharge au passage de ses molécules ou de ses particules à travers les parois et la membrane, formant ainsi le retentât qui s'accumule alors dans les canaux d'entrée tandis que le liquide épuré s'échappe par les canaux de sortie voire en partie par la périphérie du filtre si celle-ci est libre. Cette technique est limitée par l'accumulation de particules et la formation d'un gâteau à la surface du média filtrant. Le plus souvent les canaux d'entrée sont ouverts au passage du liquide à filtrer sur la face amont (ou front avant) du filtre, par référence au sens de circulation du liquide à filtrer. Ces canaux d'entrée peuvent être bouchés en face aval (ou face opposée) dudit filtre dans le sens de circulation du liquide. Les canaux de sortie ou canaux d'évacuation du liquide filtré peuvent être à contrario bouchés en face amont du filtre et ouverts en face aval du filtre.

Selon une autre technique à laquelle se rapporte également la présente invention, on utilise la filtration tangentielle, qui, au contraire, permet de limiter l'accumulation de particules, grâce à la circulation longitudinale du fluide à la surface de la membrane. Les particules restent dans le flux de circulation alors que le liquide peut traverser la membrane sous l'effet d'une différence de pression. Cette technique assure une stabilité des performances et du niveau de filtration. Elle est plus particulièrement préconisée pour la filtration des fluides très chargés en particules et/ou en molécules.

Les points forts de la filtration tangentielle sont donc sa facilité de mise en oeuvre, sa fiabilité grâce à l'utilisation des membranes de porosité adaptées pour effectuer ladite filtration, et son fonctionnement en continu.

La filtration tangentielle fait appel à peu ou pas d'adjuvant et fournit deux fluides séparés qui peuvent être tous deux valorisables : le concentrât (également appelé retentât) et le filtrat (également appelé perméat) : il s'agit d'un procédé propre qui respecte l'environnement.

Les principes et le rendement de filtration de tels filtres reposent sur l'application d'une différence de pression au sein de la structure pour permettre le passage du fluide à travers les parois poreuses. La résistance hydraulique du liquide limite cependant le flux de filtrat obtenu.

Différentes géométries ont été proposées afin d'améliorer les propriétés d'usage de tel filtres membranes. US 4069157 divulgue par exemple une structure multicanaux dont la surface, la densité des canaux et la porosité du support sont optimisés afin d'augmenter le flux tout en minimisant l'encombrement (i.e. le diamètre) du filtre. Afin de réduire la résistance hydraulique du filtre, il a été proposé de prévoir des fentes ou des canaux d'évacuations selon différentes géométries (US 4781831, US 5855781, US 6077436, EP 1457243, EP 1607129). Les fentes peuvent être réalisées par usinage sur le filtre après cuisson ou lors de l'extrusion comme cela est plus particulièrement proposé par US 2001/0020756.

Le problème de la résistance hydraulique occasionné par le passage des fluides à travers les parois poreuses se pose en particulier pour les filtres tangentiels de grand diamètre pour lesquels le liquide passant par les canaux les plus centraux est beaucoup moins bien filtré que le liquide passant par les canaux les plus périphériques du filtre.

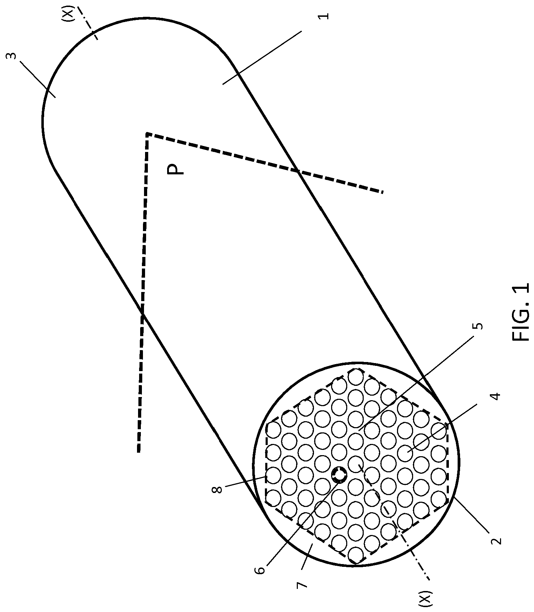

Pour pallier à ce problème, la demande de brevet WO2017/103473 décrit une structure dans laquelle des fentes d'évacuation sont pratiquées jusqu'au centre de la structure et certains canaux bouchés de telle façon que le perméat issu de la partie centrale du filtre puisse être plus facilement collecté vers la périphérie du filtre. Le filtre selon cette publication, contrairement à la présente invention, nécessite le bouchage d'une partie des canaux traversants sur leurs deux extrémités amont et aval, afin d'obtenir des canaux d'évacuation pour collecter le fluide et l'extraire via des fentes pratiquées latéralement sur le filtre (voir la figure 1).

On connait également de la demande WO2017/085551A1 un dispositif de filtration réalisé à partir de l'assemblage de plusieurs éléments filtrants monolithiques céramiques en nid d'abeille, de préférence disposés sensiblement parallèlement, chaque élément comprenant une pluralité de conduits parallèles. Une telle construction permet de limiter la taille unitaire des structures de filtration utilisées et ainsi de garantir une efficacité maximale de filtration au niveau de chaque unité. Par une telle construction, il est possible d'obtenir des filtres de grande taille sans recourir à un usinage et d'augmenter au final la surface périphérique par lequel le perméat est évacué. Une telle construction pose cependant plusieurs inconvénients : Tout d'abord, ce dispositif a pour conséquence de devoir multiplier les joints d'étanchéité et le risque de fuite ou de passage du liquide à filtrer dans le perméat. En outre, par rapport à une structure filtrante monolithique de même encombrement (ou volume total), une telle solution reposant sur l'assemblage d'une pluralité de petites structures unitaires de filtration génère une perte sensible du volume de filtration globale du filtre en raison de l'espacement nécessaire entre chacune desdites unités. De plus le coût de la solution filtre assemblé ou multiéléments filtrants s'avère significativement plus élevé que celui d'un filtre monolithique.

Les demandes WO2015/177476 et WO2016/097661 décrivent des filtres tangentiels de forme tubulaire comprenant des éléments délimitant un ensemble de canaux parallèles dont au moins une partie sont recouverts par une couche séparatrice. Selon les données fournies dans ces publications, la société déposante a pu se rendre compte que les diamètres des éléments décrits dans ces publications n'étaient cependant pas optimaux pour l'obtention des meilleures performances du filtre finalement obtenu, comme reporté dans les exemples qui suivent.

Il existe donc aujourd'hui un besoin pour une structure filtrante monolithique comprenant une membrane pour la filtration tangentielle de liquide, c'est-à-dire une structure filtrante comprenant un unique support poreux sur les parois duquel est déposée une membrane de filtration, ayant une efficacité maximale de filtration, c'est-à-dire présentant un flux optimisé et maximisé du filtrat, à encombrement égal et pour les mêmes caractéristiques essentielles de la paroi du support et de la membrane.

Par structure monolithique, on entend une structure constituée d'un seul support poreux permettant au sein d'un filtre de traiter l'ensemble du liquide à filtrer. Par opposition, un filtre non monolithique ou multiéléments peut être constitué d'une pluralité comprenant une pluralité de supports, chaque support constituant ainsi une structure filtrante individuelle, la filtration du liquide étant assurée pour partie par chaque unité. La demande WO2017/085551 décrit un tel filtre multi-éléments.

En particulier, la société déposante a découvert qu'une telle optimisation du flux de filtrat reposait sur une adaptation combinée des différents éléments constitutifs de la structure filtrante monolithique. Autrement dit, il a été découvert que les caractéristiques physiques du support et les caractéristiques physiques de la membrane devaient être ajustées conjointement pour obtenir l'efficacité maximale de la filtration.

Contrairement aux solutions précédentes qui proposent différentes configurations en prenant en compte uniquement les caractéristiques géométriques des filtres, la présente invention repose donc sur le principe de l'établissement d'une corrélation entre lesdites caractéristiques géométriques et certaines caractéristiques essentielles de la membrane pour déterminer la configuration optimale de la structure filtrante. Une telle corrélation n'avait jamais été décrite jusqu'à présent.

Ainsi, les inventeurs ont découvert qu'il était possible, pour un encombrement équivalent, de maximiser le flux de perméat filtré d'une structure monolithique ou mono-élément filtrante tangentielle par rapport aux structures multiéléments, c'est à dire comportant plusieurs des éléments filtrants.

Plus particulièrement, les inventeurs ont découvert qu'il existe un diamètre optimal de la structure filtrante monolithique qui peut être déterminé en prenant en compte les caractéristiques géométriques et physiques du support et de la membrane en deçà desquels la solution monolithique est plus performante qu'une solution multi-éléments. Il est ainsi possible par application de la présente invention de sélectionner un domaine dans lequel la structure filtrante monolithique sera la solution optimale en terme de flux tout en restant moins complexe et moins coûteuse à mettre en oeuvre qu'un filtre obtenu à partir de l'assemblage d'une pluralité d'éléments.

Plus précisément, la présente invention se rapporte à une structure monolithique de filtration à membrane pour la filtration tangentielle de liquides, comprenant :

- un support formé d'un matériau inorganique poreux de perméabilité $K_s$, ledit support présentant une forme générale tubulaire ayant un axe principal, une base amont, une base aval, une paroi périphérique délimitant une partie interne,
- une pluralité de canaux parallèles à l'axe principal du support, formés dans la partie interne du support, lesdits canaux étant séparés les uns des autres par des parois internes formées du matériau inorganique poreux,
- lesdits canaux étant ouverts à leurs extrémités amont ou aval, avantageusement ouverts à leurs deux extrémités amont et aval, dans le sens de circulation dudit liquide,
- le liquide filtré étant évacué via ladite paroi périphérique,
- une membrane de perméabilité $K_m$ et d'épaisseur moyenne $t_m$ recouvrant la surface interne des canaux ;

caractérisée en ce que le diamètre hydraulique externe $\varnothing_f$ de ladite structure filtrante satisfait la relation (1) :

$$\text{Ø}_f = \alpha \times [A + B \times \log_{10}(K_s \times t_m/K_m)] \quad (1)$$

dans laquelle $\alpha$ est un coefficient compris entre 0,85 et 1,15 et

$$A = -21570 \times e_{int}^2 - 18{,}6 \times D_h + 19{,}0 \times e_{int} - 2{,}5 \times e_{ext} + 0{,}1244$$

$$B = -11760 \times D_h \times e_{int} + 9{,}7 \times e_{int} + 3{,}1 \times e_{ext} + 0{,}04517$$

où

$D_h$ est le diamètre hydraulique moyen des canaux

$e_{int}$ est l'épaisseur minimale des parois internes entre les canaux

$e_{ext}$ est l'épaisseur minimale de la paroi périphérique du filtre,

$t_m$, $\text{Ø}_f$, $e_{int}$, $e_{ext}$ et $D_h$ étant exprimés en mètres et $K_s$ et $K_m$ étant exprimés en m$^2$.

Dans la formule précédente, on donne les définitions suivantes :
Le diamètre hydraulique $\text{Ø}_f$ du support est calculé, dans un plan de section transversal P quelconque de la structure tubulaire, à partir de la surface de la section dudit support Sf et de son périmètre Pf, selon ledit plan de section et par application de l'expression classique suivante :

$$\text{Ø}f = 4 \times Sf / Pf$$

Le diamètre hydraulique $D_h$ d'un canal est calculé, dans un plan de section transversal P quelconque de la structure tubulaire, à partir de la surface de la section du canal Sc dudit canal et de son périmètre Pc, selon ledit plan de section et par application de l'expression classique suivante :

$$D_h = 4 \times Sc / Pc$$

L'épaisseur minimale $e_{ext}$ de la paroi périphérique est mesurée entre le périmètre externe de la paroi périphérique et le bord du canal le plus proche, dans un plan de section transversal P quelconque de la structure tubulaire, tel que reporté selon la figure 1.

L'épaisseur minimale $e_{int}$ est la plus petite distance mesurée entre le bord de deux canaux partageant une paroi commune dans un plan de section transversal P quelconque de la structure tubulaire, tel que reporté selon la figure 1.

Selon des modes de réalisation préférés de la présente invention, qui peuvent être combinés entre eux le cas échéant :

-    Le rapport $Ks \times tm/Km$ est compris entre 0,01 m et 10 m.

-    Le diamètre hydraulique externe $\text{Ø}_f$ du support est compris entre 30 et 100 mm, de préférence supérieur à 40mm, voire supérieur à 50mm et inférieur à 80 mm.

-    Le diamètre hydraulique moyen des canaux $D_h$, selon un plan P perpendiculaire à l'axe principal du de la structure filtrante, est compris entre 0,5 et 7 mm, de préférence entre 1 et 5 mm, de manière plus préférée entre 1,5 et 4 mm et très préférentiellement entre 1,5 et 3,5 mm.

-    $\alpha$ est compris entre 0,90 et 1,10 et de préférence encore $\alpha$ est compris entre 0,95 et 1,05.

-    L'épaisseur minimale des parois internes $e_{int}$ des parois internes du support est comprise entre 0,3 mm et 3 mm, de préférence entre 0,7 mm et 2 mm.

- Le support présente des bases carrées, hexagonales ou circulaires, de préférence circulaires.

- La structure présente une longueur de 200 à 1500 mm, de préférence encore comprise entre 500 et 1100 mm.

- Tous les canaux présentent un diamètre hydraulique identique.

- Au moins deux canaux présentent un diamètre hydraulique différent.

- L'épaisseur minimale $e_{ext}$ de la paroi périphérique est comprise entre 0,5 et 4 mm, de préférence entre 1 et 2 mm.

- La perméabilité $K_s$ du matériau constituant le support est de préférence comprise entre $1,0.10^{-14}$ et $1,0.10^{-11}$, de préférence entre $1,0.10^{-13}$ et $1,0.10^{-11}$.

- La perméabilité $K_m$ de la membrane est de préférence comprise entre $1,0.10^{-19}$ et $1,0.10^{-14}$, de préférence entre $1,0.10^{-17}$ et $1,0.10^{-15}$.

- L'épaisseur moyenne de la membrane $t_m$ est comprise entre 0,1 et 300 $\mu$m, de préférence entre 10 et 70 $\mu$m.

- La membrane présente un diamètre médian de pores compris entre 50 et 1500 nanomètres, de préférence entre 100 et 1000 nanomètres.

- La membrane présente une porosité ouverte comprise entre 10 et 70%, de préférence entre 30 et 50%.

- Le diamètre médian des pores du support est compris entre 5 et 50 micromètres, de préférence entre 15 et 40 micromètres et de manière très préférée entre 20 et 30 micromètres.

- La porosité du support est comprise entre 20 et 60% et de préférence encore est supérieure à celle de la membrane d'au moins 10%.

- Les canaux sont de section circulaire ou polygonale, en particulier de section carrée, hexagonale ou octogonale et carrée.

L'invention se rapporte également à un dispositif de filtration comprenant :

- ladite structure filtrante

- une enceinte formant étanchéité autour de ladite structure filtrante, ladite enceinte comprenant :

   - des moyens d'introduction du liquide à filtrer en communication de fluide avec les canaux en face amont de ladite structure filtrante,

   - des moyens d'évacuation du perméat en périphérie de la structure filtrante et en communication de fluide avec la paroi périphérique de ladite structure filtrante,

   - des moyens d'évacuation du retentât ou concentrât en face avale de ladite structure filtrante.

Selon l'invention, plusieurs dispositifs de filtration tels que décrits précédemment peuvent notamment être utilisés en série et/ou en parallèle.

En outre, l'invention se rapporte à l'utilisation d'une structure filtrante telle que définie précédemment pour la purification et/ou de séparation de liquides dans le domaine de la chimie, de la pharmaceutique, de l'alimentaire, de l'agroalimentaire, des bioréacteurs, ou de l'extraction pétrolière ou des gaz de schiste.

Enfin, la présente invention décrit une méthode qui permet d'optimiser la taille de structures de filtration monolithiques. De façon non encore décrite à ce jour, la présente méthode propose de tenir compte non seulement des paramètres intrinsèques du support de filtration mais également de certains paramètres intrinsèques de la membrane de filtration déposé sur les parois du support.

Dans la relation (1) les grandeurs sont exprimées classiquement dans les unités du système international, à savoir en mètre (m) pour les grandeurs $t_m$, $\emptyset_f$, $p_c$, $p_f$, $e_{int}$, $e_{ext}$ et $D_h$, ou encore en mètre carré (m$^2$) pour les grandeurs $K_s$ et $K_m$, $S_f$ et $S_c$.

La perméabilité du support $K_s$ et le la membrane $K_m$ sont définies sur la base de la relation de Kozeny-Carman par la formule suivante : $K = (PO^3 \times D_{50}{}^2)/[180 \times (1-PO)^2]$ dans laquelle PO est la porosité ouverte et $D_{50}$ est le diamètre médian des pores.

La porosité ouverte et le diamètre médian des pores du support selon la présente invention sont déterminés de manière connue par porosimétrie au mercure. La porosité, correspondant au volume de pores, est mesurée par intrusion de Mercure à 2000 bars à l'aide d'un porosimètre à mercure tel que le porosimètre Autopore IV série 9500 Micromeritics, sur un échantillon de 1 cm³ prélevé dans un bloc du support, la région de prélèvement excluant la peau s'étendant typiquement jusqu'à 500 microns depuis la surface du bloc. La norme applicable est la norme ISO 15901-1.2005 part 1. L'augmentation de pression jusqu'à haute pression conduit à « pousser » le mercure dans des pores de taille de plus en plus petite. L'intrusion du mercure se fait classiquement en deux étapes. Dans un premier temps, une intrusion de mercure est réalisée en basse pression jusqu'à 44 psia (environ 3 bar), en utilisant une pression d'air pour introduire le mercure dans les plus gros pores (> 4 µm). Dans un deuxième temps, une intrusion à haute pression est réalisée avec de l'huile jusqu'à la pression maximale de 30000 psia (environ 2000 bar). En application de la loi de Washbum mentionnée dans la norme ISO 15901-1.2005 part 1, un porosimètre à mercure permet ainsi d'établir une distribution de tailles des pores en volume. Le diamètre médian de pores du support correspond au seuil de 50% de la population en volume.

La porosité de la membrane, correspondant au volume total des pores dans la membrane, et le diamètre médian de pores de la membrane sont avantageusement déterminés selon l'invention à l'aide d'un microscope électronique à balayage. Dans le cadre de la présente invention, il est considéré que la porosité obtenue pour la membrane par cette méthode peut être assimilée à la porosité ouverte. Typiquement, on réalise des sections d'une paroi du support en coupe transversale, de manière à visualiser toute l'épaisseur du revêtement sur une longueur cumulée d'au moins 1,5 cm. L'acquisition des images est effectuée sur un échantillon d'au moins 50 grains, de préférence d'au moins 100 grains. L'aire et le diamètre équivalent de chacun des pores sont obtenus à partir des clichés par des techniques classiques d'analyse d'images, éventuellement après une binarisation de l'image visant à en augmenter le contraste. On déduit ainsi une distribution de diamètres équivalents, dont on extrait le diamètre médian de pores. La porosité de la membrane est obtenue par intégration de la courbe de distribution de diamètres équivalents de pores. De même on peut déterminer par cette méthode une taille médiane des particules constituant la couche membranaire. Un exemple de détermination du diamètre médian de pores ou de la taille médiane des particules constituant la couche membranaire, à titre d'illustration, comprend la succession des étapes suivantes, classique dans le domaine :

Une série de clichés en MEB est prise du support avec sa couche membranaire observé selon une coupe transversale (c'est-à-dire dans toute l'épaisseur d'une paroi). Pour plus de netteté, les clichés sont effectués sur une section polie du matériau. L'acquisition de l'image est effectuée sur une longueur cumulée de la couche membranaire au moins égal à 1,5 cm, afin d'obtenir des valeurs représentatives de l'ensemble de l'échantillon.

Les clichés sont de préférence soumis à des techniques de binarisation, bien connues dans les techniques de traitement de l'image, pour augmenter le contraste du contour des particules ou des pores.

Pour chaque particule ou chaque pore constituant la couche membranaire, une mesure de son aire est réalisée. Un diamètre équivalent de pores ou de grain est déterminé(e), correspondant au diamètre d'un disque parfait de même aire que celui mesuré pour ladite particule ou pour ledit pore (cette opération pouvant éventuellement être réalisée à l'aide d'un logiciel dédié notamment Visilog® commercialisé par Noesis). Une distribution de taille de particules ou de grains ou de diamètre de pores est ainsi obtenue selon une courbe classique de répartition en nombre et une taille médiane des particules et/ou un diamètre médian de pores constituant la couche membranaire sont ainsi déterminés, cette taille médiane ou ce diamètre médian correspondant respectivement au diamètre équivalent divisant ladite distribution en une première population ne comportant que des particules ou des pores de diamètre équivalent supérieur ou égal à cette taille médiane et une deuxième population comportant que des particules de diamètre équivalent inférieur à cette taille médiane ou ce diamètre médian.

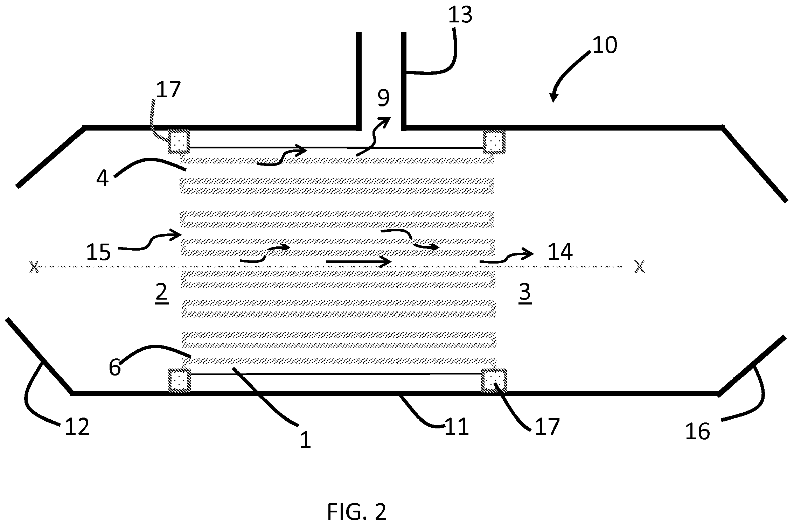

La forme du support définit la forme générale de la structure filtrante et son encombrement, au joint d'étanchéité prêt, comme représenté sur la figure 2 (joint 17). Il présente une forme tubulaire allongée le long d'un axe principal et comprend une base amont, une base aval, une surface périphérique et une portion interne. Les bases amont et aval, de formes et dimensions identiques, peuvent être de forme variée, par exemple carrée, hexagonale ou circulaire. Elles sont de préférence circulaires. La face (ou base) aval est destinée à être positionnée du côté du flux de liquide entrant (liquide à filtrer) et la face (ou base) amont à l'opposé du flux de liquide entrant.

Une pluralité de canaux parallèles à l'axe principal du support est formée dans la portion interne du support. Ces canaux, aussi appelés canaux filtrants, sont ouverts à leurs deux extrémités dans le sens de l'écoulement des fluides.

La forme des canaux n'est pas limitée et ces derniers peuvent présenter une section polygonale, notamment hexagonale ou carrée ou octogonale/carrée, ou encore circulaire mais ont de préférence une section circulaire ou carrée. Le diamètre hydraulique moyen des canaux $D_h$ est décrit précédemment. Le filtre peut comprendre plusieurs catégories de canaux, hormis les canaux périphériques qui peuvent être tronqués pour adapter les dimensions du filtre. Une catégorie de canaux est définie par un ensemble de canaux présentant une même forme et un diamètre hydraulique identique à +/- 5% près. De préférence, les canaux non périphériques sont ronds et de même catégorie. Par exemple, le filtre peut comprendre une première catégorie de canaux constituée de canaux situés proches de la surface périphérique du filtre et une seconde catégorie constituée de canaux situés au centre du filtre, les canaux de la première catégorie présentant un diamètre hydraulique supérieur à ceux de la seconde catégorie. De préférence cependant, le filtre ne comprend qu'une seule catégorie de canaux.

Les canaux sont séparés les uns des autres par des parois internes formées par le matériau inorganique poreux du support. L'épaisseur moyenne des parois internes est typiquement de 0,3 à 3 mm, de préférence entre 0,7 et 2 mm, voire entre 0,4 à 1,4 mm.

Par exemple, l'épaisseur moyenne de la paroi périphérique est comprise entre 1 et 5mm, de préférence entre 1,5 et 3mm.

Le support est formé d'un matériau inorganique poreux, notamment un matériau céramique non oxyde, tel que SiC, en particulier SiC recristallisé, $Si_3N_4$, $Si_2ON_2$, SiAlON, BN ou une combinaison de ceux-ci. Sa porosité est typiquement de 20 à 70%, de préférence de 40 à 50%, et le diamètre médian des pores de 5 nm à 50 micromètres, de préférence de 100 nm à 40 micromètres, plus préférentiellement de 5 à 30 micromètres, de préférence entre 20 et 40 micromètres. La perméabilité du support $K_s$ est de préférence comprise entre $1,0.10^{-14}$ et $1,0.10^{-11}$, de préférence entre $1,0.10^{-13}$ et $1,0.10^{-12}$ $m^2$.

La structure de filtration monolithique selon l'invention comprend également une membrane recouvrant la surface interne des canaux. Elle est formée d'un matériau inorganique poreux, notamment un matériau céramique non oxyde, tel que SiC, en particulier SiC recristallisé, $Si3N_4$, $Si_2ON_2$, SiAlON, BN ou une combinaison de ceux-ci. Sa porosité est typiquement de 10 à 70% et le diamètre médian des pores de 10 nm à 5 $\mu m$. La perméabilité de la membrane $K_m$ est de préférence de $10^{-19}$ à $10^{-14}$ $m^2$, de préférence entre $1,0.10^{-17}$ et $1,0.10^{-16}$ $m^2$. Elle présente typiquement une épaisseur moyenne $t_m$ de 0,1 à 300 $\mu m$, de préférence de 1 à 200 $\mu m$, plus préférentiellement de 10 à 70 $\mu m$.

La structure de filtration selon l'invention peut être obtenue par toute technique bien connue de l'homme du métier. Un procédé de fabrication classique comprend généralement les étapes principales de fabrication du support puis de dépôt de la membrane.

Le support est obtenu de préférence par extrusion d'une pâte au travers d'une filière et suivie d'un séchage et d'une cuisson afin de fritter le matériau du support et obtenir les caractéristiques de porosité et de résistance mécanique nécessaire à l'application. Par exemple, lorsqu'il s'agit d'un support en SiC recristallisé, il peut être en particulier obtenu selon les étapes de fabrication suivantes :

- malaxage d'un mélange comportant des particules de carbure de silicium de pureté supérieure à 98% et présentant une granulométrie telle que 75% en masse des particules présente un diamètre supérieur à 30 $\mu m$, le diamètre médian en masse de cette fraction granulométrique mesuré par granulométrie laser étant inférieur à 300 $\mu m$. Le mélange comporte aussi un liant organique du type dérivé de cellulose. On ajoute de l'eau et on malaxe jusqu'à obtenir une pâte homogène dont la plasticité permet l'extrusion, la filière étant configurée pour l'obtention des monolithes selon l'invention,

- séchage des monolithes crus par micro-onde pendant un temps suffisant pour amener la teneur en eau non liée chimiquement à moins de 1% en masse,

- cuisson jusqu'à une température d'au moins 1900 °C et inférieure à 2400°C maintenue typiquement pendant au moins 1 heure et de préférence pendant au moins 3 heures. Le matériau obtenu présente une porosité ouverte de 20 à 70%, de préférence de 40 à 50% en volume et un diamètre médian de pores de l'ordre de 10 nm à 50 micromètres, de préférence de 10 nm à 40 micromètres, plus préférentiellement de 20 à 30 micromètres.

Le support filtrant est ensuite revêtu d'une membrane. La membrane peut être déposée selon diverses techniques connues de l'homme du métier : dépôt à partir de suspensions ou de barbotines, dépôt chimique en phase vapeur (CVD) ou dépôt par projection thermique, par exemple projection plasma (plasma spraying). De préférence les couches de membrane sont déposées par enduction à partir de barbotines ou de suspensions. La membrane peut être obtenue par le dépôt de plusieurs couches successives. La membrane comprend généralement une première couche, appelée primaire, déposée en contact direct avec le substrat. Le primaire joue le rôle de couche d'accrochage. La barbotine utilisée pour le dépôt du primaire comprend de préférence entre 30 et 100% en masse de grains de SiC ayant un diamètre médian de 1 à 30 $\mu m$, le complément étant par exemple une poudre de silicium métallique, de silice et/ou une poudre de carbone. A ce mélange de poudres, on ajoute une masse d'eau déionisée correspondant à 80 à 120% de la masse totale des poudres. La membrane comprend également une couche séparatrice déposée sur la couche de primaire. C'est dans cette couche séparatrice que la porosité est contrôlée afin de donner au filtre sa sélectivité. La barbotine utilisée pour le dépôt de la couche séparatrice peut comprendre entre 30 et 70% en masse de grains de SiC ayant un diamètre médian de 0,5 à 20 $\mu m$ ou entre 30 et 70% en masse, au total, d'un mélange de silicium métallique, de silice et de carbone, le complément étant de l'eau déionisée. Certains additifs tels que des agents épaississants, des agents liants et/ou des agents dispersants peuvent être ajoutés aux barbotines afin de contrôler notamment leur rhéologie. La viscosité des barbotines est typiquement de 0,01 à 0,8 Pa.s, de préférence de 0,05 à 0,7 Pa.s, mesurée à 22 °C sous un gradient de cisaillement de 1 s$^{-1}$ selon la norme DIN -53019-1:2008. Les barbotines peuvent comprendre typiquement de 0,1 à 1% de la masse d'eau d'agents épaississant choisis de préférence parmi les dérivés cellulosiques. Elles peuvent comprendre typiquement de 0.1 à 5% de la masse de poudre de SiC d'agents liants choisis de préférence parmi les poly(vinylalcool) (PVA) ou et les dérivés d'acrylique. Les barbotines peuvent également comprendre de 0.01 à 1% de la masse de poudre de SiC d'agents dispersants choisis de préférence parmi les polymétacrylate d'ammonium. Une ou plusieurs couches de barbotine peuvent être déposées afin de former la membrane. Le dépôt d'une couche de barbotine permet typiquement d'obtenir une membrane d'épaisseur de 0,1 à 80 $\mu$m, mais des membranes plus épaisses typiquement de 100 à 300 $\mu$m peuvent être obtenues par le dépôt de plusieurs couches successives de barbotine.

Le support ainsi revêtu est ensuite séché à température ambiante typiquement pendant au moins 30 minutes puis à 60 °C pendant au moins 24 heures. Les supports ainsi séchés sont frittés à température de cuisson typiquement comprise entre 1000 et 2200 °C sous atmosphère non oxydante, de préférence sous argon de manière à obtenir une porosité de membrane mesurée par analyse d'image de 10 à 70% en volume et un diamètre médian équivalent de pores mesuré par analyse d'image de 10 nm à 5 $\mu$m.

La structure filtrante selon l'invention peut être utilisée pour diverses applications de purification de liquides et/ou de séparation de particules ou de molécules d'un liquide. La structure filtrante selon l'invention peut être utilisée pour diverses applications de purification de liquides selon l'invention permet de maximiser le flux de filtrat indépendamment de la viscosité du liquide à filtrer. Il peut être utilisé pour filtrer des liquides ayant par exemple une viscosité dynamique de 0,1 à 20 mPa.s, voire 50 mPa.s La viscosité dynamique du fluide à filtrer peut être mesurée à 20°C, sous un gradient de cisaillement de 1 s$^{-1}$ selon la norme DIN 53019-1:2008. La présente invention porte notamment sur l'utilisation d'une structure filtrante telle que décrite ci-dessus pour la purification de l'eau de production issue de l'extraction pétrolière ou des gaz de schiste. Elle trouve également son application dans divers procédés industriels de purification et/ou de séparation de liquides dans le domaine de la chimie, de la pharmaceutique, de l'alimentaire, de l'agroalimentaire ou des bioréacteurs, ainsi que dans les eaux de piscine.

Les figures annexées ci-jointes permettent d'illustrer plus en détails certains aspects de la présente invention. Les informations données par la suite ne doivent cependant pas être considérées comme restreignant la portée de l'invention, sous aucun des aspects de l'invention décrits dans les figures.

La figure 1 illustre une vue d'ensemble d'une structure filtrante commune.

La figure 2 est une vue de la face amont d'une structure filtrante explicitant la mesure des paramètres mesurés selon l'invention.

La figure 3 est une vue frontale de la face amont d'un filtre de filtration dont les canaux d'entrée et de sortie sont de section ronde.

Les figures 4 et 5 représentent deux configurations complètes de la face avant d'un filtre conforme à la présente invention. Sur ces figures, les côtes sont données en millimètres.

La figure 1 illustre une structure de filtration tangentielle comprenant un support 1 de forme cylindrique ayant un axe principal (X), une face amont 2 et une face aval 3, selon le sens de circulation du liquide à filtrer. Une pluralité de canaux 4 parallèles à l'axe principal (X) sont formés dans la partie interne 8 du support et séparés les uns des autres par des parois internes poreuses 5. Des parois périphériques 7 séparent les canaux situés dans la partie interne 8 du support de l'extérieur. Les canaux 4 sont ouverts sur la face amont et sur la face aval, dans le sens de circulation du liquide à filtrer. Les canaux 4 sont recouverts sur leur surface interne par une membrane 6 (représentée sur la figure 1 uniquement sur un canal pour plus de clarté). En fonctionnement le liquide est amené sur la face aval et traverse la structure via les canaux 4. Selon les principes de la filtration tangentielle, une partie du liquide traverse les parois poreuses 5 de la structure 1 et est filtrée via la membrane 6 déposée sur les parois. Le liquide filtré (filtrat) est récupéré en périphérie du filtre après traversée de la paroi périphérique 7, via des moyens de récupération connus en soit (non représentés sur la figure 1), par exemple du type de ceux décrits dans la publication WO2017/085551, et le liquide restant (rétentat) dans les canaux est évacué en face amont de la structure, par exemple vers d'autres unités filtrantes du même type.

En règle générale, comme représenté sur la figure 2, la structure filtrante décrite précédemment est insérée dans un dispositif de filtration 10 comprenant une enceinte 11 formant étanchéité autour de ladite structure filtrante. L'enceinte comprend notamment des moyens 12 d'introduction du liquide à filtrer 15 en communication de fluide avec les canaux en face amont de ladite structure filtrante, des moyens 13 d'évacuation du perméât 9 en périphérie de la structure filtrante et en communication de fluide avec la paroi périphérique de ladite structure filtrante et des moyens 16 d'évacuation du rétentât ou concentrât 14 en face avale de ladite structure filtrante et des joints d'étanchéité 17 comme illustré sur la figure 2.

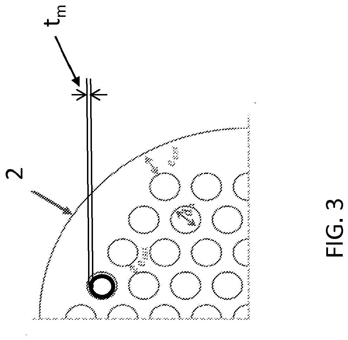

La figure 3 est une vue frontale de la face amont d'un filtre de filtration dont les canaux d'entrée et de sortie sont de section ronde. Sur la figure 3, on a représenté les paramètres $e_{int}$ (épaisseur minimale des parois internes entre

les canaux), $e_{ext}$ (épaisseur minimale de la paroi périphérique du filtre), $t_m$ et $D_h$ décrits précédemment.

La présente invention est illustrée à l'aide des exemples non limitatifs suivants, en connexion avec les figures 1 à 5 ci-jointes.

## EXEMPLES

### A- Première série d'exemples

Une première série d'exemples de structures selon l'invention (exemple 1) et comparatifs (exemples C11 à C16) ont été préparés suivant les procédés décrits ci-dessous.

### Exemple 1 (invention)

Un support a été réalisé selon les techniques bien connues de l'homme du métier par mise en forme de nid d'abeille en carbure de silicium. Pour ce faire, on mélange dans un malaxeur :

- 3000 g d'un mélange des deux poudres de particules de carbure de silicium de pureté supérieure à 98% comprenant 75% en masse d'une première poudre de grains présentant un diamètre médian d'environ 60 $\mu$m et 25% en masse d'une deuxième poudre de grains présentant un diamètre médian d'environ 2,0 $\mu$m ; et

- 300 g d'un liant organique du type dérivé de cellulose.

On ajoute environ 25% en masse d'eau par rapport à la masse de SiC et de liant organique et on malaxe jusqu'à l'obtention d'une pâte homogène dont la plasticité permet l'extrusion pour obtenir un support présentant une porosité de 40%.

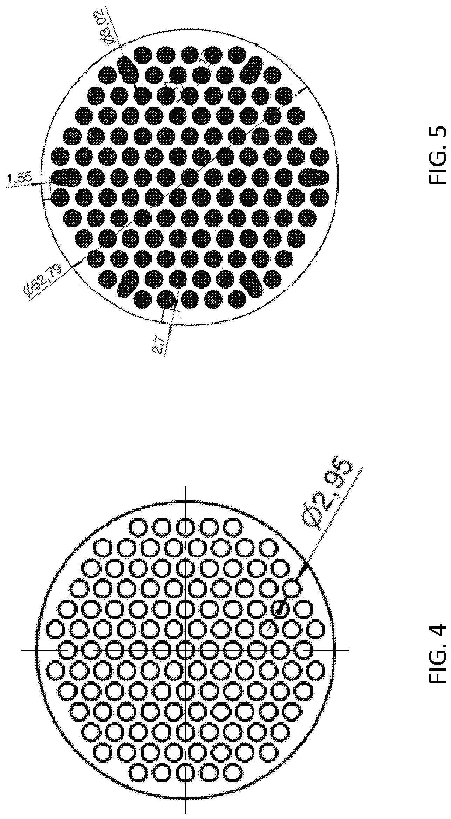

Le support est extrudé à partir de cette pâte à l'aide d'une filière pour obtenir un bloc monolithe cru cylindrique de diamètre 51 mm et de longueur 300 mm dont la partie interne présente une pluralité de canaux de section circulaire. La forme de la filière est adaptée pour obtenir des canaux de section circulaire ayant un diamètre hydraulique de 3 mm et des parois internes d'épaisseur minimale de 1200 micromètres selon figure 4.

Le support cru obtenu est ensuite séché pour amener la teneur en eau non liée chimiquement à moins de 1% en masse, puis cuit sous Argon jusqu'à une température de 2100° C qui est maintenue pendant 5 heures. Le support obtenu présente une porosité ouverte de 40% et un diamètre médian de pores d'environ 25 micromètres, tels que mesurés par porosimétrie au mercure.

Une membrane de filtration est ensuite déposée sur la surface interne des canaux. Le dépôt de la membrane est réalisé par enduction de barbotines. Pour cela, un primaire d'accrochage de la membrane est constitué dans un premier temps, à partir d'une barbotine dont la formulation minérale comporte 50% en masse d'une poudre de grains de SiC noir dont le diamètre médian D50 est d'environ 20 micromètres et 50% d'eau déionisée.

Une couche séparatrice est ensuite déposée sur la couche de primaire à partir d'une barbotine comprenant 50% en masse de grains de SiC ayant un diamètre médian d'environ 1 $\mu$m et 50% d'eau déionisée. La viscosité des barbotines, mesurée à 22 °C sous un gradient de cisaillement de 1 s$^{-1}$ selon la norme DINC33-53019-1 :2008, est réglée à 0,1 Pa.s à l'aide d'additifs bien connus de l'homme du métier.

Le primaire et la membrane sont déposés selon le même procédé. La barbotine est introduite dans un réservoir sous agitation à 20 tour/min. Après une phase de désaérage sous vide léger, typiquement 25 mbars, tout en conservant l'agitation, le réservoir est mis en légère surpression d'environ +1 bar afin de pouvoir enduire l'intérieur du support à partir du bas jusque vers le haut. Cette opération ne prend que quelques secondes pour un support de 300 mm de longueur. La barbotine vient enduire la paroi interne des canaux de l'élément filtrant et l'excès est ensuite évacué par gravité immédiatement après dépôt.

Le support enduit est ensuite séché à température ambiante pendant 30 minutes puis à 60 °C pendant 30 h. Le support enduit ainsi séché est ensuite fritté à une température de 1400°C sous atmosphère d'Argon pendant 4 heures pour obtenir une porosité de la membrane de 40% avec un diamètre médian de pores de 250 nm.

La structure filtrante ainsi obtenue présente les caractéristiques reportées dans le tableau 1 ci-joint. Son diamètre $Ø_f$ est conforme à la relation (1) selon la présente invention.

### Exemples comparatifs C11 et C12

A la différence de l'exemple selon l'invention la filière a été modifiée afin d'obtenir des supports de plus petit diamètre pour la constitution d'un filtre multiéléments de même diamètre $Ø_f$ que le filtre selon l'exemple 1, tous les autres paramètres structuraux restant autrement inchangés. Trois unités sont assemblées selon les principes décrits dans la demande WO2017/085551 pour constituer le filtre selon l'exemple C11 et quatre unités sont assemblées selon les principes décrits dans la demande WO2017/085551 pour constituer le filtre selon l'exemple C12. L'espacement entre chaque unité dans le filtre assemblé est égal à 3 mm.

Exemples comparatifs C13 et C14

Les supports et membranes ont été réalisés de la manière que pour l'exemple selon l'invention. A la différence de l'exemple 1 selon l'invention, la filière a été modifiée afin d'obtenir des supports monolithiques des exemples C13 et C14 de diamètres $\varnothing_f$ respectivement 40 mm et 62 mm, tous les autres paramètres structuraux restant inchangés. Les diamètres de ces deux structures sont donc en dehors, respectivement en dessous et au-dessus, de l'intervalle définit par application de la formule (1) selon l'invention.

Exemples comparatifs C15 et C16

Les filtres selon les exemples C15 et C16 présentent le même diamètre que l'exemple comparatif C14, mais sont constitués par l'assemblage selon les principes de la demande WO2017/085551 d'unités pour la constitution d'un filtre multiéléments de même diamètre $\varnothing_f$ que la structure monolithique filtrante selon C14, tous les autres paramètres structuraux restant autrement inchangés par rapport à celle-ci. L'espacement entre chaque unité dans le filtre assemblé est égal à 3 mm.

On a reporté dans le tableau 1 ci-dessous l'ensemble des données et des résultats obtenus pour les exemples 1 et C11 à C16.

**B- Deuxième série d'exemples**

Selon cette seconde série d'exemples, des structures selon l'invention (exemples 2 et des structures comparatives (C21 à C26) ont été préparés suivant les même procédés et les mêmes principes que ceux décrits ci-dessous. Dans cette seconde série d'exemples, on fait varier la perméabilité du support Ks du support.

Exemple 2 selon l'invention :

Pour obtenir une autre valeur de la perméabilité Ks, à la différence de l'exemple 1, pour cette seconde série d'exemples on réalise le support à partir d'un mélange de deux poudres de particules de carbure de silicium de pureté supérieure à 98% comprenant 70% en masse d'une première poudre de grains présentant un diamètre médian d'environ 11 $\mu$m et 30% en masse d'une deuxième poudre de grains présentant un diamètre médian d'environ 0,5 $\mu$m.

Le support cru obtenu est ensuite séché pour amener la teneur en eau non liée chimiquement à moins de 1% en masse, puis cuit sous Argon jusqu'à une température de 2150° C qui est maintenue pendant 5 heures. Le support obtenu présente une porosité ouverte de 40% et un diamètre médian de pores d'environ 15 micromètres, tels que mesurés par porosimétrie au mercure.

On obtient ainsi des supports dont la perméabilité est inférieure à celle mesurée dans la première série d'exemples tel que reporté dans le tableau 2. On opère ensuite de la même façon que pour l'exemple pour déposer la même membrane associée au même primaire que pour la structure selon l'exemple 1.

Exemples comparatifs C21 à C26 :

Les exemples C21 à C26 correspondent respectivement aux exemples C11 à C16, à la différence que des supports de plus petite perméabilité, conformément à l'exemple 2, sont utilisés pour constituer les filtres selon ces exemples.

On a reporté dans le tableau 2 ci-dessous l'ensemble des données et des résultats obtenus.

Tableau de résultats et test :

Pour chacune de ces structures filtrantes monolithiques ou multiéléments, on a déterminé le rapport $\Phi/\Phi_{max}$, dans lequel $\Phi$ est le flux caractéristique de la structure filtrante en question et $\Phi_{max}$ est le flux mesuré pour la structure filtrante selon l'exemple 1 selon l'invention pour la première série d'exemple ou selon l'exemple 2 selon l'invention pour la deuxième série d'exemple, pour lesquels on attribue une efficacité de 100%. Le flux caractéristique d'un filtre a été évalué selon la méthode suivante : à une température de 25 °C, un fluide constitué d'eau déminéralisée alimente les filtres à évaluer sous une pression transmembranaire de 0,5 bar et une vitesse de circulation dans les canaux de 2 m/s. Le perméat est récupéré à la périphérie du filtre. La mesure du flux caractéristique du filtre est exprimée en L/h/m/bar après 20h de filtration. Les résultats obtenus ainsi que les toutes les caractéristiques dimensionnelles pertinentes des filtres ainsi obtenus sont résumés dans le tableau 1 ci-après.

Interprétation des résultats :

En ce qui concerne la première série d'exemple (exemple 1 selon l'invention et C11 à C16) :
Les filtres multiéléments selon les exemples C11 et C12 présentent une capacité de filtration inférieure à celle de la structure monolithique selon l'exemple 1 selon l'invention comme l'indique le rapport des flux mentionné dans le tableau 1.

Les structures filtrantes monolithiques selon l'exemple C13 dont le diamètre n'est pas conforme à l'invention, présentent des flux très dégradés par rapport à la structure de référence.

La comparaison des exemples C14 à C16 permet de montrer que la structure filtrante monolithique sélectionnée selon l'invention présente un flux et des capacités de filtration optimale, en tenant compte des caractéristiques structurales combinées du support et de la membrane de filtration. En particulier, les flux mesurés selon les filtres obtenus par l'assemblage de plusieurs unités filtrantes (exemples C15 et C16) apparaissent plus performantes que celles pour la structure monolithique de même diamètre (exemple C14). Dans un tel cas, le filtre multiéléments apparait plus performant, même si sa mise en oeuvre est plus complexe.

L'exemple 2 montre qu'une perméabilité Ks du support plus faible nécessite un diamètre Ø$_f$ de la structure filtrante monolithique inférieur, par application de la présente invention.

De la même manière que pour la première série d'exemple, on observe qu'il est possible, par application de la même formule (1) selon l'invention, d'optimiser le diamètre du filtre en fonction de paramètres structuraux à la fois du support et de la membrane.

On a également étudié les différents filtres décrits dans les demandes WO2015/177476A1 (D1) et WO2016/097661 (D2), également déposés par la présente demanderesse. Les résultats des tests et calculs sont reportés dans le tableau 3 qui suit. On peut voir que la valeur du diamètre des structures décrites dans ces exemples n'est pas optimale et ne rentre pas dans les critères de la présente invention tels que décrits notamment dans les revendications qui suivent.

**Tableau 1**

| Exemple | | Ex. 1 | C11 | C12 | C13 | C14 | C15 | C16 |
|---|---|---|---|---|---|---|---|---|
| $D_{50}$ membrane | nm | 250 | 250 | 250 | 250 | 250 | 250 | 250 |
| PO membrane | % | 40 | 40 | 40 | 40 | 40 | 40 | 40 |
| Km ($\times 10^{17}$) | $m^2$ | 6,2 | 6,2 | 6,2 | 6,2 | 6,2 | 6,2 | 6,2 |
| tm | $\mu$m | 50 | 50 | 50 | 50 | 50 | 50 | 50 |
| $D_{50}$ support | $\mu$m | 25 | 25 | 25 | 25 | 25 | 25 | 25 |
| PO support | % | 40 | 40 | 40 | 40 | 40 | 40 | 40 |
| Ks ($\times 10^{13}$) | $m^2$ | 6,2 | 6,2 | 6,2 | 6,2 | 6,2 | 6,2 | 6,2 |
| (Ks $\times$ tm)/Km | m | 0,5 | 0,5 | 0,5 | 0,5 | 0,5 | 0,5 | 0,5 |
| Dh | mm | 3 | 2 | 2 | 3 | 3 | 2 | 2 |
| $e_{int}$ | mm | 1,2 | 0,7 | 0,7 | 1,2 | 1,2 | 0,7 | 0,7 |
| $e_{ext}$ | mm | 1,5 | 1 | 1 | 1,5 | 1,5 | 1 | 1 |
| Type filtre | - | monolithique | multi-éléments | multi-éléments | monolithe | monolithe | multi-éléments | multi-éléments |
| nombre de filtres | - | 1 | 3 | 4 | 1 | 1 | 3 | 4 |
| Ø structure unitaire | mm | 51 | 22 | 19 | 40 | 62 | 27 | 24 |
| Ø filtre | mm | 51 | 51 | 51 | 40 | 62 | 62 | 62 |
| Øf calculé selon relation(1) | mm | 43-59 | - | - | 43-59 | 43-59 | - | - |
| $\Phi/\Phi$max | - | 1,00 | 0,92 | 0,92 | 0,60 | 1,37 | 1,41 | 1,47 |

**Tableau 2**

| Exemple | | Ex.2 | C21 | C22 | C23 | C24 | C25 | C26 |
|---|---|---|---|---|---|---|---|---|
| $D_{50}$ membrane | nm | 250 | 250 | 250 | 250 | 250 | 250 | 250 |
| PO membrane | % | 40 | 40 | 40 | 40 | 40 | 40 | 40 |
| Km ($\times 10^{17}$) | $m^2$ | 6,2 | 6,2 | 6,2 | 6,2 | 6,2 | 6,2 | 6,2 |
| tm | $\mu m$ | 50 | 50 | 50 | 50 | 50 | 50 | 50 |
| $D_{50}$ support | $\mu m$ | 15 | 15 | 15 | 15 | 15 | 15 | 15 |
| PO support | % | 40 | 40 | 40 | 40 | 40 | 40 | 40 |
| Ks ($\times 10^{13}$) | $m^2$ | 2,2 | 2,2 | 2,2 | 2,2 | 2,2 | 2,2 | 2,2 |
| (Ks $\times$ tm) /Km | m | 0,18 | 0,18 | 0,18 | 0,18 | 0,18 | 0,18 | 0,18 |
| Dh | mm | 3 | 2 | 2 | 3 | 3 | 2 | 2 |
| $e_{int}$ | mm | 1,2 | 0,7 | 0,7 | 1,2 | 1,2 | 0,7 | 0,7 |
| $e_{ext}$ | mm | 1,5 | 1 | 1 | 1,5 | 1,5 | 1 | 1 |
| Type filtre | - | monolithe | multi-éléments | multi-éléments | monolithe | monolithe | multi-éléments | multi-éléments |
| nombre de filtres | - | 1 | 3 | 4 | 1 | 1 | 3 | 4 |
| Ø structure unitaire | mm | 43 | 18 | 16 | 33 | 51 | 22 | 19 |
| Ø filtre | mm | 43 | 43 | 43 | 33 | 51 | 51 | 51 |
| Øf calculé selon relation(1) | mm | 36-48 | - | - | 36-48 | 36-48 | - | - |
| $\Phi/\Phi$max | - | 1,00 | 1,00 | 1,00 | 0,57 | 1,34 | 1,45 | 1,53 |

**Tableau 3**

| Exemple | | ex 1 (D1) | ex 2 (D1) | ex 3 (D1) | ex 4 (D1) | ex 1 (D2) | ex 2 (D2) | ex 3 (D2) | ex 4 (D2) | ex 5 (D2) | ex 6 (D2) |
|---|---|---|---|---|---|---|---|---|---|---|---|
| Ø monolithe divulgué | mm | 25 | 25 | 25 | 25 | 25 | 25 | 25 | 25 | 25 | 25 |
| Ø optimal selon invention | mm | 35 | 35 | 35 | 33 | 48 | 30 | 46 | 75 | 48 | 81 |
| Ø max selon invention | mm | 40 | 40 | 40 | 38 | 56 | 35 | 53 | 86 | 56 | 94 |
| Ø min selon invention | mm | 30 | 29 | 30 | 28 | 41 | 26 | 39 | 64 | 41 | 69 |

**Revendications**

1. Structure monolithique de filtration à membrane pour la filtration de liquides, comprenant :

   - un support formé d'un matériau inorganique poreux de perméabilité $K_s$, ledit support présentant une forme générale tubulaire ayant un axe principal, une base amont, une base avale, une paroi périphérique délimitant une partie interne;
   - une pluralité de canaux parallèles à l'axe principal du support, formés dans la partie interne du support, lesdits canaux étant séparés les uns des autres par des parois internes formées du matériau inorganique poreux;
   - tous lesdits canaux étant ouverts à leurs extrémités amont ou aval dans le sens de circulation dudit liquide,
   - le liquide filtré étant évacué via ladite paroi périphérique,
   - une membrane de perméabilité $K_m$ et d'épaisseur moyenne $t_m$ recouvrant la surface interne des canaux ;

   **caractérisée en ce que** son diamètre hydraulique externe $\emptyset_f$ satisfait la relation (1) :

   $$\emptyset_f = \alpha \times [A + B \times \log_{10}(K_s \times t_m/K_m)] \ (1)$$

   dans laquelle $\alpha$ est un coefficient compris entre 0,85 et 1,15 et

   $$A = -21570 \times e_{int}^2 - 18,6 \times D_h + 19,0 \times e_{int} - 2,5 \times e_{ext} + 0,1244$$

   $$B = -11760 \times D_h \times e_{int} + 9,7 \times e_{int} + 3,1 \times e_{ext} + 0,04517$$

   où :

   $D_h$ est le diamètre hydraulique moyen des canaux,
   $e_{int}$ est l'épaisseur minimale des parois internes entre les canaux,
   $e_{ext}$ est l'épaisseur minimale de la paroi périphérique du filtre,
   $t_m$, $\emptyset_f$, $e_{int}$, $e_{ext}$ et $D_h$ étant exprimés en mètres et $K_s$ et Km étant exprimés en m$^2$
   les perméabilités du support $K_s$ et de la membrane $K_m$ étant définies sur la base de la relation de Kozeny-Carman par la formule suivante : $K = (PO^3 \times D_{50}^2)/[180 \times (1-PO)^2]$ dans laquelle PO est la porosité ouverte et $D_{50}$ est le diamètre médian des pores, ladite porosité ouverte et ledit diamètre médian de pores étant déterminés par porosimétrie au mercure conformément à la présente description .

2. Structure de filtration selon la revendication 1, dans laquelle le rapport Ks$\times t_m$/$K_m$ est compris entre 0,01m et 10m.

3. Structure de filtration selon l'une quelconque des revendications précédentes, dans laquelle le diamètre hydraulique externe $\emptyset_f$ du support est compris entre 30 et 100 mm, de préférence supérieur à 50mm et inférieur à 80 mm.

4. Structure de filtration selon l'une quelconque des revendications précédentes, dans laquelle le diamètre hydraulique moyen des canaux $d_h$ est compris entre 0,5 et 7 mm, de préférence entre 1 et 5 mm, de manière plus préférée entre 1,5 et 3,5 mm.

5. Structure de filtration selon l'une quelconque des revendications précédentes, dans laquelle l'épaisseur minimale des parois internes $e_{int}$ du support est comprise entre 0,3 mm et 3 mm, de préférence entre 0,7 mm et 2 mm.

6. Structure de filtration selon l'une quelconque des revendications précédentes, **caractérisé en ce que** le support présente des bases carrées, hexagonales ou circulaires, de préférence circulaires.

7. Structure de filtration selon l'une quelconque des revendications précédentes, **caractérisée en ce que** tous les canaux présentent un diamètre hydraulique identique.

8. Structure de filtration selon l'une quelconque des revendications 1 à 7, **caractérisée en ce qu'**au moins deux canaux présentent un diamètre hydraulique différent.

9. Structure de filtration selon l'une quelconque des revendications précédentes, **caractérisé en ce que** l'épaisseur minimale $e_{ext}$ de la paroi périphérique du filtre est comprise entre 0,5 et 4 mm, de préférence entre 1 et 2 mm.

10. Structure de filtration selon l'une quelconque des revendications précédentes, **caractérisé en ce que** la perméabilité Ks du support est de préférence comprise entre $1,0.10^{-14}$ et $1,0.10^{-11}$.

11. Structure de filtration selon l'une quelconque des revendications précédentes, **caractérisé en ce que** la perméabilité Km de la membrane est de préférence comprise entre $1,0.10^{-19}$ et $1,0.10^{-14}$.

12. Structure de filtration selon l'une quelconque des revendications précédentes, **caractérisé en ce que** l'épaisseur moyenne de la membrane $t_m$ est comprise dans un domaine allant de 0,1 à 300 $\mu$m, de préférence allant de 10 à 70 $\mu$m.

13. Structure de filtration selon l'une quelconque des revendications précédentes, **caractérisé en ce que** la membrane présente une porosité ouverte comprise entre 10 et 70%, de préférence entre 30 et 50%.

14. Structure de filtration selon l'une quelconque des revendications précédentes, **caractérisé en ce que** le diamètre médian des pores du support est compris entre 20 et 50 micromètres.

15. Structure de filtration selon l'une quelconque des revendications précédentes, **caractérisé en ce que** les canaux sont de section circulaire ou polygonale, en particulier de section carrée, hexagonale ou octogonale et carrée.

16. Dispositif de filtration comprenant :

   - la structure de filtration selon l'une des revendications précédentes
   - une enceinte formant étanchéité autour de ladite structure filtrante, ladite enceinte comprenant :

      - des moyens d'introduction du liquide à filtrer en communication de fluide avec les canaux en face amont de ladite structure filtrante,
      - des moyens d'évacuation du perméat en périphérie de la structure filtrante et en communication de fluide avec la paroi périphérique de ladite structure filtrante,
      - des moyens d'évacuation du rétentat ou concentrat en face avale de ladite structure filtrante.

17. Utilisation d'une structure de filtration selon l'une des revendications 1 à 15 ou d'un dispositif de filtration selon la revendication précédente pour la purification et/ou de séparation de liquides dans le domaine de la chimie, de la pharmaceutique, de l'alimentaire, de l'agroalimentaire, des bioréacteurs, ou de l'extraction pétrolière ou des gaz de schiste.

**Patentansprüche**

1. Monolithische Membranfiltrationsstruktur für die Filtration von Flüssigkeiten, umfassend:

   - einen Träger, der aus einem porösen anorganischen Material mit Permeabilität $K_s$ ausgebildet ist, wobei der Träger eine allgemeine röhrenförmige Form aufweist, die eine Hauptachse, eine stromaufwärtige Basis, eine stromabwärtige Basis und eine Umfangswand besitzt, die einen internen Teil begrenzt;
   - eine Vielzahl von Kanälen parallel zu der Hauptachse des Trägers, die in dem internen Teil des Trägers ausgebildet sind, wobei die Kanäle durch interne Wände voneinander getrennt sind, die aus dem porösen anorganischen Material ausgebildet sind;
   - wobei alle Kanäle an ihrem stromaufwärtigen oder stromabwärtigen Ende in der Zirkulationsrichtung der Flüssigkeit offen sind,
   - wobei die gefilterte Flüssigkeit über die Umfangswand abgeleitet wird,
   - eine Membran mit Permeabilität $K_m$ und einer durchschnittlichen Dicke $t_m$, die die interne Oberfläche der Kanäle bedeckt;

   **dadurch gekennzeichnet, dass** ihr externer hydraulischer Durchmesser $\emptyset_f$ die Beziehung (1) erfüllt:

$$\varnothing_f = \alpha \text{ x } [A + B \text{ x } \log_{10}(K_s \text{ x } t_m/K_m)] \qquad (1)$$

wobei $\alpha$ ein Koeffizient zwischen 0,85 und 1,15 ist, und

$$A = -21570 \text{ x } e_{int}^2 - 18,6 \text{ x } D_h + 19,0 \text{ x } e_{int} - 2,5 \text{ x } e_{ext} + 0,1244$$

$$B = -17760 \text{ x } D_h \text{ x } e_{int} + 9,7 \text{ x x } e_{int} + 3,1 \text{ x } e_{ext} + 0,04517$$

wobei:

$D_h$ der durchschnittliche hydraulische Durchmesser der Kanäle ist,
$e_{int}$ die minimale Dicke der inneren Wände zwischen den Kanälen ist,
$e_{ext}$ die minimale Dicke der Umfangswand des Filters ist,
$t_m$, $\varnothing_f$, $e_{int}$, $e_{ext}$ und $D_h$ in Metern ausgedrückt werden und $K_s$ und Km in m$^2$ ausgedrückt werden,
wobei die Permeabilitäten des Trägers $K_s$ und der Membran $K_m$ auf der Basis der Kozeny-Carman-Beziehung durch die folgende Formel definiert sind: $K = (PO^3 \times D_{50}{}^2)/[180 \times (1-PO)^2]$, wobei PO die offene Porosität und $D_{50}$ der mittlere Porendurchmesser ist, wobei die offene Porosität und der mittlere Porendurchmesser durch Quecksilberporosimetrie entsprechend der vorliegenden Beschreibung bestimmt werden.

2. Filtrationsstruktur nach Anspruch 1, wobei das Verhältnis Ks$\times$t$_m$/K$_m$ zwischen 0,01 m und 10 m liegt.

3. Filtrationsstruktur nach einem der vorstehenden Ansprüche, wobei der externe hydraulische Durchmesser $\varnothing_f$ des Trägers zwischen 30 und 100 mm, vorzugsweise größer als 50 mm und kleiner als 80 mm ist.

4. Filtrationsstruktur nach einem der vorstehenden Ansprüche, wobei der durchschnittliche hydraulische Durchmesser der Kanäle $d_h$ zwischen 0,5 und 7 mm, vorzugsweise zwischen 1 und 5 mm, mehr bevorzugt zwischen 1,5 und 3,5 mm liegt.

5. Filtrationsstruktur nach einem der vorstehenden Ansprüche, wobei die minimale Dicke der internen Wände e$_{int}$ des Trägers zwischen 0,3 mm und 3 mm, vorzugsweise zwischen 0,7 mm und 2 mm liegt.

6. Filtrationsstruktur nach einem der vorstehenden Ansprüche,
**dadurch gekennzeichnet, dass** der Träger quadratische, sechseckige oder kreisförmige, vorzugsweise kreisförmige, Basen aufweist.

7. Filtrationsstruktur nach einem der vorstehenden Ansprüche,
**dadurch gekennzeichnet, dass** alle Kanäle einen identischen hydraulischen Durchmesser aufweisen.

8. Filtrationsstruktur nach einem der Ansprüche 1 bis 7,
**dadurch gekennzeichnet, dass** mindestens zwei Kanäle einen unterschiedlichen hydraulischen Durchmesser aufweisen.

9. Filtrationsstruktur nach einem der vorstehenden Ansprüche,
**dadurch gekennzeichnet, dass** die minimale Dicke e$_{ext}$ der Umfangswand des Filters zwischen 0,5 und 4 mm, vorzugsweise zwischen 1 und 2 mm liegt.

10. Filtrationsstruktur nach einem der vorstehenden Ansprüche,
**dadurch gekennzeichnet, dass** die Permeabilität Ks des Trägers vorzugsweise zwischen $1,0.10^{-14}$ und $1,0.10^{-11}$ liegt.

11. Filtrationsstruktur nach einem der vorstehenden Ansprüche,
**dadurch gekennzeichnet, dass** die Permeabilität Km der Membran vorzugsweise zwischen $1,0.10^{-19}$ und $1,0.10^{-14}$ liegt.

12. Filtrationsstruktur nach einem der vorstehenden Ansprüche,

**dadurch gekennzeichnet, dass** die durchschnittliche Dicke der Membran $t_m$ in einem Bereich von 0,1 bis 300 $\mu$m, vorzugsweise von 10 bis 70 $\mu$m liegt.

13. Verfahren nach einem der vorstehenden Ansprüche,
    **dadurch gekennzeichnet, dass** die Membran eine offene Porosität zwischen 10 und 70 %, vorzugsweise zwischen 30 und 50 %, aufweist.

14. Filtrationsstruktur nach einem der vorstehenden Ansprüche,
    **dadurch gekennzeichnet, dass** der mittlere Durchmesser der Poren des Trägers zwischen 20 und 50 Mikrometer liegt.

15. Filtrationsstruktur nach einem der vorstehenden Ansprüche,
    **dadurch gekennzeichnet, dass** die Kanäle einen kreisförmigen oder vieleckigen Querschnitt, insbesondere einen quadratischen, sechseckigen oder achteckigen und quadratischen Querschnitt besitzen.

16. Filtrationsvorrichtung, umfassend:

    - die Filtrationsstruktur nach einem der vorstehenden Ansprüche
    - ein Gehäuse, das eine Abdichtung um die Filtrationsstruktur herum ausbildet, das Gehäuse umfassend:
    - Mittel zum Einbringen der zu filternden Flüssigkeit in Fluidverbindung mit den Kanälen auf der stromaufwärtigen Seite der Filtrationsstruktur,
    - Mittel zum Ableiten des Permeats an einem Umfang der Filtrationsstruktur und in Fluidverbindung mit der Umfangswand der Filtrationsstruktur,
    - Mittel zum Ableiten des Retentats oder Konzentrats auf der stromabwärtigen Seite der Filtrationsstruktur.

17. Verwendung einer Filtrationsstruktur nach einem der Ansprüche 1 bis 15 oder einer Filtrationsvorrichtung nach dem vorstehenden Anspruch für die Reinigung und/oder Trennung von Flüssigkeiten im Bereich Chemie, Pharmazeutik, Ernährung, Lebensmittel, Bioreaktoren oder Öl- oder Schiefergasförderung.

**Claims**

1. A monolithic membrane-type filtration structure for filtering liquids, comprising:

    - a support formed of a porous inorganic material of permeability $K_s$, said support having a tubular overall shape with a main axis, an upstream base, a downstream base, a peripheral wall delimiting an internal part;
    - a plurality of passages parallel to the main axis of the support, formed in the internal part of the support, said passages being separated from one another by internal walls formed of the porous inorganic material;
    - all said passages being open at their upstream or downstream ends in the direction in which said liquid circulates,
    - the filtered liquid being removed via said peripheral wall,
    - a membrane of permeability $K_m$ and of mean thickness $t_m$ covering the internal surface of the passages;

    **characterized in that** its external hydraulic diameter $\varnothing_f$ satisfies the relationship (1):

    $$\varnothing_f = \alpha \times [A + B \times \log_{10}(K_s \times t_m/K_m)] \ (1)$$

    in which $\alpha$ is a coefficient comprised between 0.85 and 1.15, and

    $$A = -21570 \times e_{int}^2 - 18.6 \times D_h + 19.0 \times e_{int} - 2.5 \times e_{ext} + 0.1244$$

    $$B = -11760 \times D_h \times e_{int} + 9.7 \times e_{int} + 3.1 \times e_{ext} + 0.04517$$

    in which:

    $D_h$ is the mean hydraulic diameter of the passages,

$e_{int}$ is the minimum thickness of the internal walls between the passages,

$e_{ext}$ is the minimum thickness of the peripheral wall of the filter,

$t_m$, $\varnothing_f$, $e_{int}$, $e_{ext}$ and $D_h$ being expressed in meters and $K_s$ and Km being expressed in m$^2$

the permeabilities of the support Ks and the membrane Km being defined on the basis of the Kozeny-Carman relationship by the following formula: $K = (PO^3 \times D_{50}^2)/[180 \times (1-PO)^2]$ where PO is the open porosity and $D_{50}$ is the median pore diameter, said open porosity and median pore diameter being determined by mercury porosimetry in accordance with the present description.

2. The filtration structure as claimed in claim 1, in which the ratio $Ks \times t_m/K_m$ is comprised between 0.01m and 10m.

3. The filtration structure as claimed in either one of the preceding claims, in which the external hydraulic diameter $\varnothing_f$ of the support is comprised between 30 and 100 mm, preferably greater than 50 mm and less than 80 mm.

4. The filtration structure as claimed in any one of the preceding claims, in which the mean hydraulic diameter of the passages $d_h$ is comprised between 0.5 and 7 mm, preferably between 1 and 5 mm, and more preferably, between 1.5 and 3.5 mm.

5. The filtration structure as claimed in any one of the preceding claims, in which the minimum thickness of the internal walls $e_{int}$ of the support is comprised between 0.3 mm and 3 mm, preferably between 0.7 mm and 2 mm.

6. The filtration structure as claimed in any one of the preceding claims, **characterized in that** the support has square, hexagonal or circular bases, preferably circular bases.

7. The filtration structure as claimed in any one of the preceding claims, **characterized in that** all the passages have the same hydraulic diameter.

8. The filtration structure as claimed in any one of claims 1 to 7, **characterized in that** at least two passages have a different hydraulic diameter.

9. The filtration structure as claimed in any one of the preceding claims, **characterized in that** the minimum thickness $e_{ext}$ of the peripheral wall of the filter is comprised between 0.5 and 4 mm, preferably between 1 and 2 mm.

10. The filtration structure as claimed in any one of the preceding claims, **characterized in that** the permeability Ks of the support is preferably comprised between $1.0 \times 10^{-14}$ and $1.0 \times 10^{-11}$.

11. The filtration structure as claimed in any one of the preceding claims, **characterized in that** the permeability Km of the membrane is preferably comprised between $1.0 \times 10^{-19}$ and $1.0 \times 10^{-14}$.

12. The filtration structure as claimed in any one of the preceding claims, **characterized in that** the mean thickness of the membrane $t_m$ is comprised in a range ranging from 0.1 to 300 $\mu$m, preferably ranging from 10 to 70 $\mu$m.

13. The filtration structure as claimed in any one of the preceding claims, **characterized in that** the membrane has an open porosity comprised between 10 and 70%, preferably between 30 and 50%.

14. The filtration structure as claimed in any one of the preceding claims, **characterized in that** the median diameter of the pores of the support is comprised between 20 and 50 micrometers.

15. The filtration structure as claimed in any one of the preceding claims, **characterized in that** the passages are of circular or polygonal cross section, particularly of square, hexagonal or octagonal and square cross section.

16. A filtration device comprising:

- the filtration structure according to one of the preceding claims,
- an enclosure sealing around said filter structure, said enclosure comprising:

- means for introducing the liquid that is to be filtered, in fluidic communication with the passages on the upstream face of said filter structure,
- means for removing the permeate at the periphery of the filter structure and in fluidic communication with the peripheral wall of said filter structure,
- means for removing the retentate or concentrate on the downstream face of said filter structure.

17. The use of a filtration structure as claimed in one of claims 1 to 15 or of a filtration device as claimed in the preceding claim for purifying and/or separating liquids in the chemical, pharmaceutical, food or agrifoodstuffs industry, in bioreactors, or in the extraction of oil or gases from shale.

FIG. 1

FIG. 2

EP 3 717 106 B1

FIG. 3

FIG. 5

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4069157 A
- US 4781831 A
- US 5855781 A
- US 6077436 A
- EP 1457243 A
- EP 1607129 A
- US 20010020756 A
- WO 2017103473 A
- WO 2017085551 A1
- WO 2015177476 A
- WO 2016097661 A
- WO 2017085551 A
- WO 2015177476 A1